(19) Europäisches Patentamt

European Patent Office

Office européen des brevets

(11) **EP 0 754 398 B1**

(12) **EUROPEAN PATENT SPECIFICATION**

(45) Date of publication and mention
of the grant of the patent:
**28.04.2004 Bulletin 2004/18**

(51) Int Cl.⁷: **H05B 1/02**, F24H 1/20,
H05B 6/10

(21) Application number: **94905918.2**

(22) Date of filing: **29.11.1993**

(86) International application number:
**PCT/US1993/011580**

(87) International publication number:
**WO 1995/015070 (01.06.1995 Gazette 1995/23)**

(54) **HEATING SYSTEM FOR STRUCTURES**

HEIZSYSTEM FÜR BAUELEMENTE

SYSTEME DE CHAUFFAGE DE STRUCTURES

(84) Designated Contracting States:
**CH DE DK FR GB LI SE**

(43) Date of publication of application:
**22.01.1997 Bulletin 1997/04**

(73) Proprietor: **Granborg, Bertil S. M.
Kailua, HI 96734 (US)**

(72) Inventor: **Granborg, Bertil S. M.
Kailua, HI 96734 (US)**

(74) Representative: **Fiener, Josef
Patentanw. J. Fiener et col.,
P.O. Box 12 49
87712 Mindelheim (DE)**

(56) References cited:
**US-A- 3 706 872       US-A- 4 081 737
US-A- 4 280 045       US-A- 4 408 117
US-A- 4 585 178       US-A- 4 667 781**

**Description**

**BACKGROUND OF THE INVENTION**

This invention relates to devices for using the inherent resistivity of electrically conductive elements of a structure to generate heat within the structure to keep them from becoming inoperable or damaged due to a cold and/ or freezing environment.

**SUMMARY OF THE INVENTION**

This invention presents a device for generating heat in an electrically conductive element of a structure comprising a means for causing an alternating current through said element, the current being sufficient in relation to an inherent resistivity of said element to generate a desired amount of heat. Such devices are disclosed in US-A- 4,280,045 and US-A- 3,706,872. The desired amount of heat will be that amount sufficient to prevent damage or icing under the circumstances. The frequency of the current is preferably high enough to cause at least a majority of the current carriers to travel on and within a skin portion of said element for more efficient surface heating. The alternating current can be induced and a means for inducing the current can be a source of alternating voltage which is transformed into the alternating current, the alternating voltage being applied to a primary winding of a transformer and the element or elements being serially within an electrical current loop of a secondary winding of the transformer.

An object of this invention is to provide a means for generating heat within one or more electrically conductive elements of a structure and thereby heat the structure without the use of any dedicated heating elements, that is, elements whose only function is to generate heat such as heating coils and the like.

This object of the invention is achieved by a system as defined in claim 1. Preferred embodiments are subject of dependent claims.

**BRIEF DESCRIPTION OF THE DRAWINGS**

Figure 1 illustrates two configurations for this invention as applied to disc-braked wheels.
Figure 2 illustrates application of this invention to a block braked wheel.
Figure 3 illustrates application of this invention to linkage between disc brakes applied to the axle of the wheels.
Figure 4 illustrates application of this invention to the fulcrums of disc brakes affixed to the axle of the wheels.

**DESCRIPTION OF THE PREFERRED EMBODIMENTS**

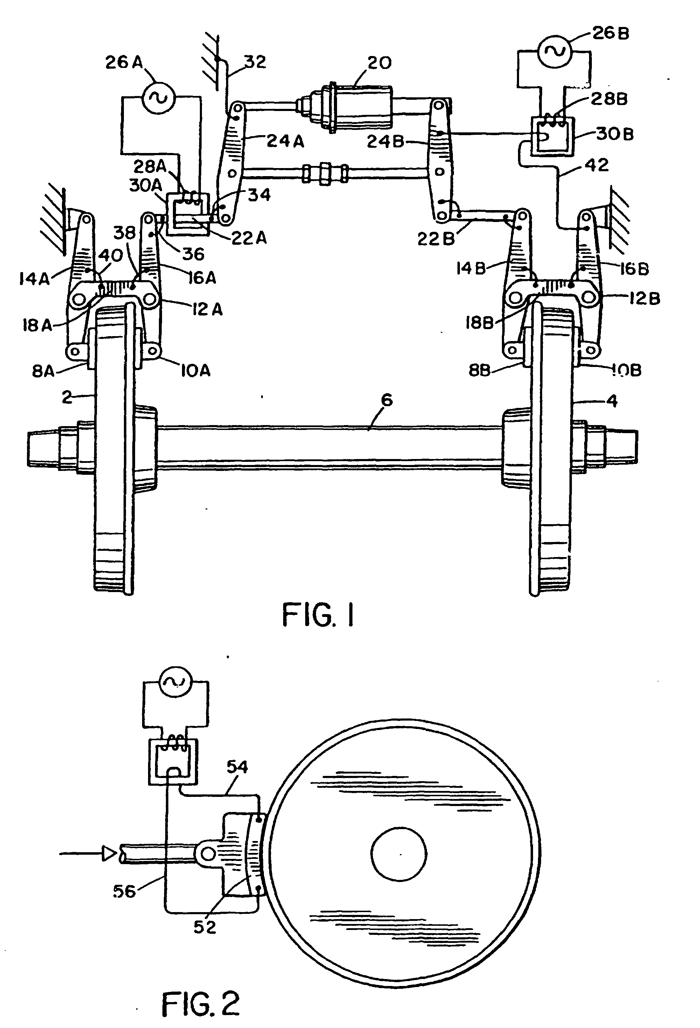

Referring to Figure 1, it depicts one type of disc brake and two different ways to connect this invention. A pair of railroad car wheels, 2 and 4, are connected by axle 6. Each wheel is illustrated as having a braking means associated with it comprising a pair of opposing friction pads, 8A and 10A, and 8B and 10B for the left and right wheels, respectively. The friction pads are selectively applied to the wheels by means of metal calipers, 12A and 12B. The calipers each comprise two metal levers, 14A and 16A for the left and 14B and 16B for the right, pivotally engaged with a metal fulcrum piece, 18A and 18B, to apply the friction pads to their associated wheels in pincer fashion. Typically one of the levers of-each caliper (e.g. 14A and 16B respectively) is held in a fixed position while the other lever (e.g. 16A and 14B respectively) is pivoted about its fulcrum by an hydraulic ram 20 (commonly called a "brake cylinder") through first and second metal coupling linkages, 22A and 24A, respectively, for the left and 22B and 24B, respectively, for the right.

Referring again to Figure 1, an embodiment of this invention is illustrated to comprise an alternating voltage source 26A with a two lead output that is electrically connected to a primary winding 28A of a stepdown transformer 30A. The voltage source can be one or more generators turned by the wheels themselves, a generator turned by engine, or any alternating voltage source of suitable capacity as suitability is defined in this specification. The secondary winding is illustrated as being a single electrically conductive loop comprising: a first conductive wire 32 connecting the first linkage 24A to a chassis ground; a second conductive wire 34 ensuring that electrical continuity is maintained between the first linkage and the second linkage 22A; a third conductive wire 36 ensuring that electrical continuity is maintained between the second linkage and the un-fixed caliper 16A; a fourth conductive wire 38 ensuring that electrical continuity is maintained between the un-fixed caliper and its fulcrum 18A; and a fifth conductive wire 40 ensuring that electrical continuity is maintained between the fulcrum and the fixed caliper 14A which is electrically connected to chassis ground. The segment of the secondary conductive loop that actually passes through the transformer's core is illustrated to be the second linkage 22A.

The braking system of the right wheel as depicted in Figure 1 is heated with a slightly different circuit. An alternating voltage source 26B is in electrical communication serially with the primary windings 28B of a transformer having a core 30B. The caliper levers 14B and 16B are in electrical communication with their associated fulcrum 18B as in the left side. The first and second metal coupling linkages, 22B and 24B are electrically connected as on the left side. The difference between the left and right side lies in the fact that the linkage 22B does not pass through the core of the transformer, but rather an electrical current conduit 42 comprising of the secondary winding of the transformer, one end being electrically connected to the linkage 24B and the other end being electrically connected to the lever 16B.

The basic principle is to provide heat to structures to prevent them from becoming inoperable or destroyed due to temperatures below zero degree Centigrade or due to ice accretion. In the preferred embodiments described herein, alternating electrical energy is applied to the primary of a stepdown transformer in which a secondary winding produces high current and low voltage in a circuit made up of structural elements or sequences of them serially connected. The high current preferably alternates at a frequency high enough to generate heat by the resistive losses close to the surface of the conductive elements due to skin effect, which concentrates the current at or near the surface, i.e. "skin."

Several variations of the application of this invention to braking systems can be used depending on the linkage systems. For example, the brake blocks themselves could be heated separately.

Referring to Figure 2, a metal brake block 52 is illustrated to be a segment of the secondary winding. Other parts of the railroad car could also be heated by means for this principle. In order to have as high over-all efficiency as possible, the low voltage connecting cables, 54 and 56, should be as short as possible.

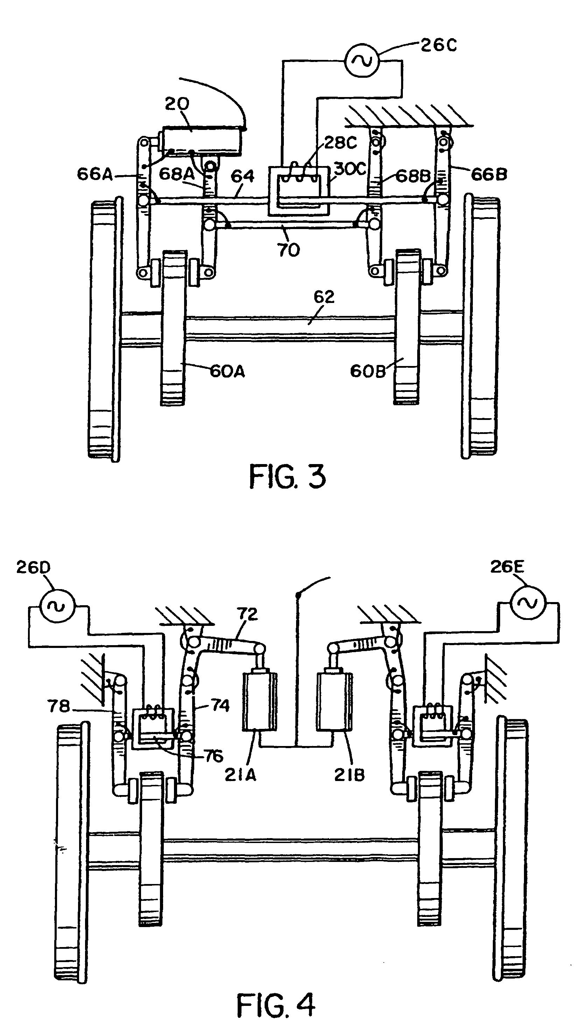

Referring to Figure 3, the braking system for the wheels operates under the disk brake principle, but is different from the system as depicted in Figure 1. Disks 60A on the left and 60B on the right illustrate braking disks affixed to the axle 62 of the wheels, the disks being near their respective wheels. An alternating electrical energy source 26C energizes the primary windings 28C of a transformer having a core 30C. Through the core is a conductive linking rod 64 mechanically linked and electrically connected to caliber levers 66A and 66B. The secondary circuit comprises that linkage 64 as one segment, the upper portion of caliper 66B which is mechanically and electrically connected to chassis ground, through chassis ground, through an upper portion of a caliper 68B which is also electrically and mechanically connected to chassis ground, through a second linkage 70 which is mechanically and electrically connected to lever 68B and 68A, through the upper portion of 68A, through the shell of the ram 20, through the upper portion of lever 68A, and to the linkage 64 again. In this fashion, both the first and second linkages, and all of the caliper levers are warmed by the current flowing in that secondary loop induced therein by the primary of a transformer 28C.

Referring to Figure 4, the same type disk system as illustrated in Figure 4 is shown except with two driving rams 21A and 21B. Two sources of electrical energy 26D and 26E, left and right respectively, are utilized. The secondary loops of the transformers associated with said electrical energy sources are mirror images of each other. So the discussion will be provided only for the left braking mechanism. The secondary loop of the transformer on the left comprises a segment of an elbow 72 which mechanically pivots and is electrically connected to chassis ground. An end of the elbow remote from the ram is mechanically connected and electrically connected to a caliper lever 74. Which in turn is pivotally and electrically connected to a fulcrum arm 76 which passes through the core of the transformer and is in effect a secondary winding of the transformer. The opposite end of the fulcrum are is mechanically and electrically connected to the opposing lever of the caliper 78 which in turn is mechanically and electrically connected to the chassis ground, the chassis ground providing the last link in the loop. The configurations in both Figures 3 and 4 do not require any cables if electrical continuity can be maintained through the linkages interfaces.

In operation, a voltage is applied to the primary of the transformer causing current through its primary windings. This induces a current into the secondary circuit, which is a high-current low-voltage circuit, by means of well known transformer induction principles. Since it is a stepdown transformer, a current gain is felt in the secondary. By proper selection of the primary winding count, the core material of the transformer, and the voltage levels, the current gain can be on the order of hundreds of amperes, enough to generate heat when opposed by the inherent resistivity of a structure's element or elements in the circuit of the transformer's secondary winding, preferably one turn. The high alternating current will generate heat by the resistive losses close to the surface of the conductive elements due to the skin effect, which concentrates the current at or near the surface.

For the purpose of system design the electrical impedance of a cylindrical metal bar is calculated by means by Bessel-type differential equations. The electrical impedance of a solid cylindrical bar is as follows:

$$Z = R + j\omega L = \frac{Hl}{2\pi\alpha}\varrho(1+j) \quad ohm$$

where

$$H = \sqrt{\frac{0.5\,\omega\,\mu\,\mu_o}{\varrho}}$$

$\alpha$ = radius $\qquad$ $\omega$ = 2$\pi$f (f = frequency in Hz)
l = length $\qquad$ $\mu$ = relative permeability
$\varrho$ = specific resistivity $\quad$ $\mu_o$ = 4$\pi$ x 10$^{-7}$

This formula is valid for large H x $\alpha$.

For comparison the DC resistance is:

$$R_o = \frac{l}{\pi\alpha^2}\varrho \quad ohm$$

A solid iron bar was theoretically analyzed and tested as follows:

$\alpha$ = 0.9525 cm $\qquad$ f = 60 hz
l = 0.67 m $\qquad$ $\mu$ = 815
$\varrho$ = 0.119 x 10$^{-6}$ ohm m

which yields:

Z = 2.399677 x 10$^{-3}$ ohm, and
$R_o$ = 0.02797 x 10$^{-3}$ ohm.

The measured data was:

I = 250 A (amperes)
V = 0.6 V (volts)
S = VI = 150 VA (complex power)
P = S COS $\theta$ = 150(0.707) = 106 W

The bar could maintain an estimated 75° C temperature and showed a considerable heat capacity.

The alternating voltage sources as described herein can be any alternating voltage source of suitable capacity as "suitable" is defined in this specification.

It is necessary to have flexible connections between any moving parts in order to have good electrical contact between the metal parts and to avoid them being welded together. (A few hundred amperes are to be expected.) In order to optimize the operating cost, a control system of conventional design can be used with temperature sensors and switches operating such that heating takes place only below freezing temperatures, or if so desired, only during intermittent periods. The transformers can also be designed such that they have minimum leakage.

The foregoing description and drawings were given for illustrative purposes only, it being understood that the invention is not limited to the embodiments disclosed, but is intended to embrace any and all alternatives, equivalents, modifications and rearrangements of elements falling within the scope of the invention as defined by the following claims.

## Claims

1. A system for generating heat within a control portion of a vehicle in order to inhibit freeze-up of said control portion due to icing and in order to de-ice said control portion, said system for generating heat comprising:

   (a) at least one control linkage that is electrically conductive, said at least one control linkage being a functional member of said control portion and grounded to the vehicle chassis
   (b) means (34,36,38,40;54,56) for electrically connecting said at least one control linkage as a serial member in an electric circuit loop, and

(c) means (26A,26B) for causing an alternating electric current in said electric circuit loop of sufficient frequency to cause at least a majority of current in said at least one control linkage to be constricted at or near the surface of said at least one control linkage, the current being of sufficient magnitude in relation to an inherent resistivity of said at least one control linkage due to skin effect to generate a desired amount of heat at or near said surface of said at least one control linkage, wherein said means (26A,26B) for causing an alternating electric current comprises a source of electrical energy and an electrical transformer (30A,30B), the electrical energy being applied to a primary winding (28A,28B) of said transformer (30A,30B), and wherein said at least one control linkage is a serial member of an electric circuit loop (32,34,36,38,40,42) of a secondary winding of said transformer (30A,30B).

2. The system according to claim 1 wherein said secondary winding is a single turn.

3. The system according to claim 1, being included in a self-propelled vehicle's braking mechanism and said at least one control linkage comprises brake coupling linkage (22A,22B) a brake shoe means (52) for applying friction to a rim of a vehicle wheel (2,4) or a disk brake fulcrum (18A, 18B) or a disk brake caliper lever (66A,66B).

**Patentansprüche**

1. System zur Erzeugung von Wärme in einem Steuerteil eines Fahrzeugs, um ein Einfrieren des Steuerteils aufgrund von Vereisung zu verhindern und den Steuerteil zu enteisen, wobei das System zur Erzeugung von Wärme umfasst:

(a) zumindest ein Steuergestänge, das elektrisch leitend ist, wobei das zumindest eine Steuergestänge ein Funktionselement des Steuerteils ist und am Fahrzeugchassis geerdet ist;
(b) Mittel (34, 36, 38, 40; 54, 56) zum elektrischen Verbinden des zumindest einen Steuergestänges als Reihenelement in einem geschlossenen Stromregelkreis; und
(c) Mittel (26A, 26B) zum Bewirken eines elektrischen Wechselstroms in dem geschlossenen Stromregelkreis mit ausreichender Frequenz, um zu bewirken, dass zumindest eine Strommajorität in dem zumindest einen Steuergestänge an oder nahe an der Oberfläche des zumindest einen Steuergestänges zusammengezogen wird, wobei der Strom aufgrund des Skineffektes eine ausreichende Stärke in Bezug auf einen spezifischen Eigenwiderstand des zumindest einen Steuergestänges aufweist, um einen gewünschten Wärmebetrag an oder nahe an der Oberfläche des zumindest einen Steuergestänges zu erzeugen, wobei die Einrichtung (26A, 26B) zum Bewirken eines elektrischen Wechselstroms eine elektrische Energiequelle und einen elektrischen Transformator (30A, 30b) umfasst, wobei die elektrische Energie an eine Primärwicklung (28A, 28B) des Transformators (30A, 30B) angelegt wird und das zumindest eine Steuergestänge ein Reihenelement eines geschlossenen Stromregelkreises (32, 34, 36, 38, 40; 42) einer Sekundärwicklung des Transformators (30A, 30B) ist.

2. System gemäß Anspruch 1, wobei die Sekundärwicklung eingängig ist.

3. System gemäß Anspruch 1, das in einem Bremsmechanismus eines selbstangetriebenen Fahrzeugs enthalten ist, und wobei das zumindest eine Steuergestänge ein Bremskupplungsgestänge (22A, 22B), eine Bremsbackeneinrichtung (52) zum Aufbringen von Reibung auf einen Radkranz eines Fahrzeugrads (2, 4), eine Scheibenbremsen-Hebelunterlage (18A, 18B) oder einen Scheibenbremsen-Tasthebel (66A, 66B) umfasst.

**Revendications**

1. Système de production de chaleur dans une partie de commande d'un véhicule pour limiter le gel de ladite partie de commande en raison de la formation de glace et pour dégivrer ladite partie de commande, ledit système de production de chaleur comprenant :

(a) au moins une liaison de commande, qui est électriquement conductrice, ladite au moins une liaison de commande étant un élément fonctionnel de ladite partie de commande et étant connectée à la masse formée par le châssis du véhicule,
(b) des moyens (34,36,38,40;54,56) pour connecter électriquement ladite au moins une liaison de commande à un élément en série dans une boucle de circuit électrique, et

(c) des moyens (26A,26B) de production d'un courant électrique alternatif dans ladite boucle du circuit électrique ayant une fréquence suffisante pour provoquer une limitation d'au moins une majorité du courant dans ladite au moins une liaison de commande au niveau ou à proximité de la surface, le courant ayant une amplitude suffisante par rapport à une résistivité propre de ladite au moins une liaison de commande en raison de l'effet de peau pour produire une quantité désirée de chaleur au niveau ou à proximité de ladite surface de ladite au moins une liaison de commande, lesdits moyens (26A,26B) servant à produire un courant électrique alternatif comprenant un transformateur électrique (30A,30B), l'énergie électrique étant appliquée à un enroulement primaire (28A,28B) dudit transformateur (30A,30B), et ladite au moins une liaison de commande étant un élément en série d'une boucle de circuit électrique (32,34,36,38, 40,42) d'un enroulement secondaire dudit transformateur (30A,30B).

2. Système selon la revendication 1, dans lequel ledit enroulement secondaire est une spire unique.

3. Système selon la revendication 1, qui est inclus dans un mécanisme de freinage de véhicule autopropulsé et dans ladite au moins une liaison de commande comprend une liaison (22A,22B) de couplage de frein, ou des moyens (52) formant patin de frein pour appliquer un frottement à une jante (2,4) du véhicule, ou un pivot (18A,18B) du disque de frein, ou un levier (66A,66B) d'étrier du disque de frein.

FIG. 1

FIG. 2

7

FIG. 3

FIG. 4

8